# EUROPÄISCHE PATENTSCHRIFT

(11) **EP 1 329 367 B1**
(45) Veröffentlichungstag und Bekanntmachung des Hinweises auf die Patenterteilung: **22.03.2006**
(21) Anmeldenummer: 03000654.8
(22) Anmeldetag: 16.01.2003
(51) Int. Cl.: B60R 22/195, B60R 22/26

(54) **Fahrzeuginsassen-Rückhaltesystem**
Vehicle occupant restraint system
Système de retenue pour les occupants d'un véhicule

(30) Priorität: 18.01.2002 DE 20200741 U
(43) Veröffentlichungstag der Anmeldung: 23.07.2003
(60) Teilanmeldung: 04024940.1
(73) Patentinhaber: Daimler Chrysler AG, 70567 Stuttgart (DE)
(72) Erfinder: Lutz, Jürgen, 89555 Steinheim (DE); Strobel, Ralf, 73525 Schwäbisch Gmünd (DE)
(74) Vertreter: Thoms, Frank

(56) Entgegenhaltungen:
- DE-A- 2 444 801
- DE-A- 2 543 068
- DE-A- 19 960 848
- DE-C- 4 414 031
- DE-U- 29 806 199

## Beschreibung

Die Erfindung betrifft ein Fahrzeuginsassen-Rückhaltesystem mit einer Sicherheitsgurtanordnung gemäß dem Oberbegriff des Anspruchs 1.

Um eine relative Verschiebung zwischen dem Fahrzeuginsassen, der auf dem Fahrzeugsitz sitzt und z.B. einem Gurtschloß oder einem Gurtstraffer zu vermeiden, ist es sinnvoll, derartige Elemente des Sicherheitsgurtsystems am Fahrzeugsitz selbst anzuordnen. Vor allem bei der Gurtstraffung ist solch eine Anordnung vorteilhaft.

Aus der gattungsgemäßen DE-C-44 14 031 ist ein Rückhaltesystem bekannt, bei dem eine Stange eines Sitzhöhenverstellers eines Fahrzeugsitzes durchgängig zwischen den beiden Schienen des Fahrzeugsitzes verläuft. An dieser Stange ist auch ein Gurtstraffer angebracht, der über ein Verbindungsseil mit einem Gurtschloß verbunden ist.

Die DE-A-24 44 801 zeigt einen Gurtstraffer, der unterhalb eines Fahrzeugsitzes über eine Zugstange mit einem Umlenkbeschlag an einem Gurtband angreift, um gegebenenfalls den Beckgurtabschnitt zu straffen. Der zylindrische Gurtstraffer ist lediglich an einem Ende am Sitzrahmen befestigt.

Ein weiteres Beispiel für einen unterhalb eines Fahrzeugsitzes angeordneten Gurtstraffer ist in der DE-A-25 43 068 gezeigt. In einem Zylinder sind zwei gegenläufig bewegte Kolben angeordnet, so daß der Straffer gleichzeitig beide Enden des Beckengurtabschnitts anziehen kann. Die Gurtenden sind jeweils über einen Endbeschlag mit einem zum zugeordneten Kolben führenden Zugseil verbunden. Jedes Zugseil läuft über eine Umlenkung.

Ziel der Erfindung ist es, ein flexibel einsetzbares Fahrzeuginsassen-Rückhaltesystem unter Verwendung von am Fahrzeugsitz angeordneten Elementen eines Sicherheitsgurtsystems zu schaffen.

Dies wird bei einem Fahrzeuginsassen-Rückhaltesystem mit den Merkmalen des Anspruchs 1 erreicht. Die Verwendung des Befestigungselements gestattet es, die benötigten Elemente des Sicherheitsgurtsystems nach Belieben mit dem Fahrzeugsitz zu verbinden. Da sich das Befestigungselement unter dem Sitz erstreckt, entsteht keinerlei optische Beeinträchtigung. Außerdem kann das Befestigungselement eine weitere Aufgabe erfüllen, indem es zur Stabilität des Fahrzeugsitzes beiträgt.

Das Befestigungselement weist eine Führung für einen End- oder Umlenkbeschlag auf, in der sich der End- oder Umlenkbeschlag während einer Straffung des Sicherheitsgurts bewegt. Auch diese Führung ist bevorzugt einstückig mit dem Befestigungselement ausgebildet, kann aber auch als zusätzliches Element gestaltet sein, das nur am Befestigungselement montiert wird, wenn es benötigt ist.

Mit Hilfe der Erfindung läßt sich ein flexibles Baukastensystem verwirklichen. So können z.B. zwei Gurtstraffer vorgesehen sein, die beide am Befestigungselement befestigt sind. Einer dieser Gurtstraffer kann ein Schloßstraffer sein und einer der Gurtstraffer ein End- oder Umlenkbeschlagstraffer. Genausogut kann aber, wenn nur ein Gurtstraffer vorgesehen ist, ein entsprechender End- oder Umlenkbeschlag für das andere Ende des Sicherheitsgurtes am Befestigungselement befestigt sein. Das Befestigungselement ist bevorzugt so ausgelegt und so auf die Geometrie von Gurtstraffern, End- und Umlenkbeschlägen abgestimmt, daß ohne eine Veränderung des Befestigungselements sowohl ein oder mehrere Gurtstraffer oder direkt ein End- oder ein Umlenkbeschlag daran befestigt werden können.

Bevorzugt enthält einer der Gurtstraffer ein flexibles Angriffsmittel, z.B. ein Zugseil, das mit dem Gurtschloß oder mit einem End- oder Umlenkbeschlag verbunden ist, und das Befestigungselement weist eine Umlenkung für das Angriffsmittel auf. Diese Umlenkung ist bevorzugt einstückig mit dem Befestigungselement ausgebildet, kann aber auch, dem Baukastenprinzip folgend, ein separates Bauteil sein, das am Befestigungselement nur dann befestigt wird, wenn es für die Ausstattung des jeweiligen Fahrzeugs gewünscht ist.

In einer vorteilhaften Ausführungsform der Erfindung weist das Befestigungselement eine Umlenkung für das Gurtband des Sicherheitsgurts auf. Da sich das Befestigungselement und damit auch der Gurtstraffer unterhalb der Sitzfläche bzw. unterhalb des Fahrzeugsitzes befinden, ist eine derartige Umlenkung vorteilhaft, um einen möglichst reibungsfreien Verlauf des Gurtbandes zu gewährleisten. Auch diese Umlenkung ist bevorzugt einstückig mit dem Befestigungselement ausgebildet, kann aber auch als separates Element ausgeführt sein.

Bevorzugt ist der Gurtstraffer ein End- oder Umlenkbeschlagstraffer und das Befestigungselement eine im Querschnitt U-förmige Strebe, die sich auf der Seite des End- oder Umlenkbeschlagstraffers am Sitz entlang nach oben erstreckt und in diesem Bereich eine U-förmige Führung und Umlenkung für das Gurtband bildet.

Vorzugsweise wird das Gurtband während der Straffung quer zur Längsrichtung des Gurtbandes gefaltet. Diese Faltung reduziert die notwendige Baugröße des Befestigungselementes. Eine Faltung des Gurtbandes läßt sich vorteilhaft dadurch erreichen, daß sich die Breite des U-förmigen Befestigungselements seitlich des Sitzes nach unten verringert, um schmäler als das Gurtband zu werden und dieses bei seinem Entlanggleiten während der Straffung zu falten.

Es ist auch möglich, daß das einzuziehende Stück des Gurtbands entlang dessen Längsrichtung so zusammengenäht ist, daß seine Breite reduziert ist. Hierdurch ist die Breite des Gurtbandes bereits verringert, so daß das Befestigungselement schmal gehalten werden kann.

In einer bevorzugten Ausführungsform der Erfindung ist die Verbindung zwischen dem Angriffsmittel und dem End- oder Umlenkbeschlag durch eine Verschraubung realisiert. Dies ist gleich aus mehreren Gründen vorteilhaft. Zum einen läßt sich so gemäß dem Baukastenprinzip problemlos ein Rückhaltesystem konfigurieren, das einen Gurtstraffer aufweist, genauso wie ein Rückhaltesystem, bei dem der End- oder Umlenkbeschlag direkt am Befestigungsmittel fixiert ist. Zum anderen erlaubt eine derartige Verbindung, den Fahrzeugsitz, wie üblich, als letztes Element im Fahrzeug zu montieren, d.h. nach dem Einbau des Sicherheitsgurtsystems. In diesem Fall wird der bereits im Fahrzeug angebrachte End- oder Umlenkbeschlag einfach nach dem Einbau des Fahrzeugsitzes mit dem Angriffsmittel verschraubt.

Bevorzugt sind Angriffsmittel und End- oder Umlenkbeschlag an ihrer Verbindungsstelle über ein lösbares Bauteil am Befestigungselement montiert. Auf diese Weise kann die Verbindungsstelle am Befestigungselement gesichert werden, so daß sie vor Beschädigungen geschützt ist und ein Klappern im Fahrzeug vermieden wird. Das Bauteil kann so ausgebildet sein, daß es eine Sollbruchstelle aufweist, so daß bei einer Straffung die Verbindungsstelle ohne Zeitverzug bewegbar ist.

Bevorzugt ist am Befestigungselement ein auf die Geometrie des End- oder Umlenkbeschlag abgestimmtes Haltemittel vorgesehen, das bei nicht vorgesehenem End- oder Umlenkbeschlagstraffer eine unmittelbare Befestigung des End-oder Umlenkbeschlags am Befestigungselement erlaubt. In einer möglichen Ausführungsform hat der End- oder Umlenkbeschlag wenigstens eine Öse und das Befestigungselement eine Gegenbohrung, und eine sich durch Öse und Gegenbohrung erstreckende Schraube fixiert den End- oder Umlenkbeschlag am Befestigungselement.

Zur Verkürzung der Montagezeit ist es vorteilhaft, wenn das Befestigungselement und der oder die Gurtstraffer eine vormontierte Einheit bilden.

Besonders vorteilhaft ist es, wenn die Schienen und das Befestigungselement einen vormontierten Schlitten bilden, an dem der Fahrzeugsitz befestigt werden kann, wobei der Schlitten, das Gurtschloß und der wenigstens eine Gurtstraffer eine vormontierte Einheit bilden. In diesem Fall wird das Rückhaltesystem vorkonfiguriert, anschließend der Fahrzeugsitz auf den Schienen befestigt, der Fahrzeugsitz im Fahrzeug montiert und zum Schluß der Endbeschlag oder Umlenkbeschlag mit dem Befestigungselement oder dem Gurtstraffer verbunden. Mit diesem System lassen sich individuelle Kundenwünsche flexibel, schnell und einfach erfüllen.

Die Erfindung erstreckt sich auch auf einen mit den Schienen verbundenen Fahrzeugsitz.

Weitere Merkmale und Vorteile der Erfindung ergeben sich aus der nachfolgenden Beschreibung diverser Ausführungsbeispiele mit Bezug auf die beigefügten Zeichnungen. In diesen zeigen:
- Figur 1 eine schematische Darstellung eines erfindungsgemäßen Fahrzeuginsassen-Rückhaltesystems mit einem Fahrzeugsitz und einer Sicherheitsgurtanordnung;
- Figur 2 ein Detail aus Figur 1;
- Figur 3 ein Befestigungselement mit einer Gurtbandführung des erfindungsgemäßen Fahrzeuginsassen-Rückhaltesystems nach Fig. 1;
- Figur 4 ein Detail eines Befestigungselements eines erfindungsgemäßen Fahrzeuginsassen-Rückhaltesystems;
- Figur 5 einen Querschnitt einer Gurtführung eines erfindungsgemäßen Fahrzeuginsassen-Rückhaltesystems;
- Figur 6 ein Detail eines erfindungsgemäßen Fahrzeuginsassen-Rückhaltesystems;
- Figur 7 ein Detail eines erfindungsgemäßen Fahrzeuginsassen-Rückhaltesystems; und
- Figur 8 eine Verbindung eines End- oder Umlenkbeschlags mit einem Angriffsmittel zur Verwendung bei einem erfindungsgemäßen Fahrzeuginsassen-Rückhaltesystem.

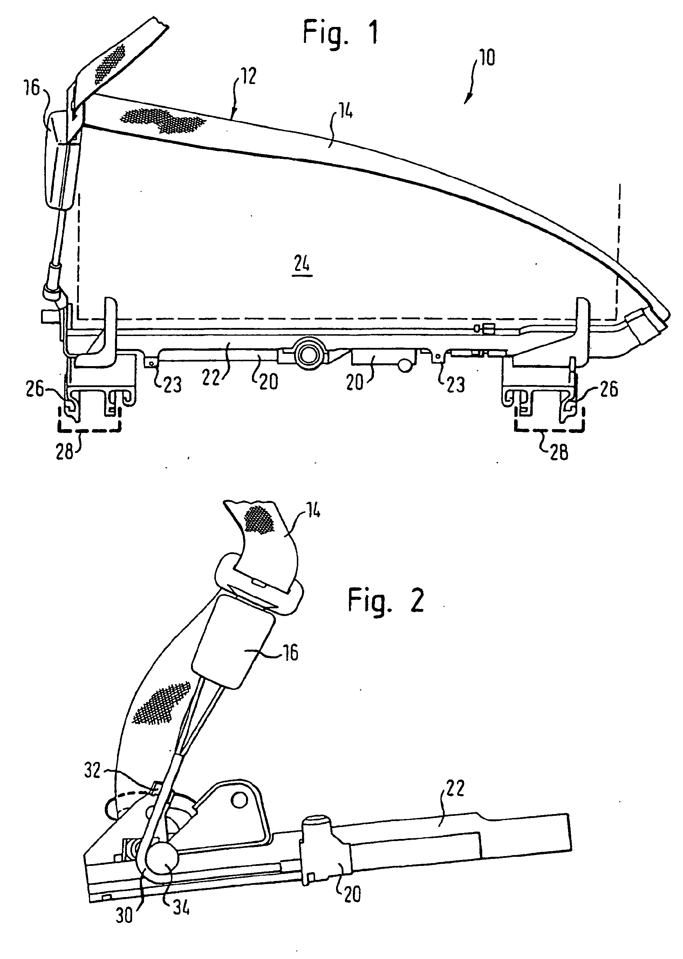

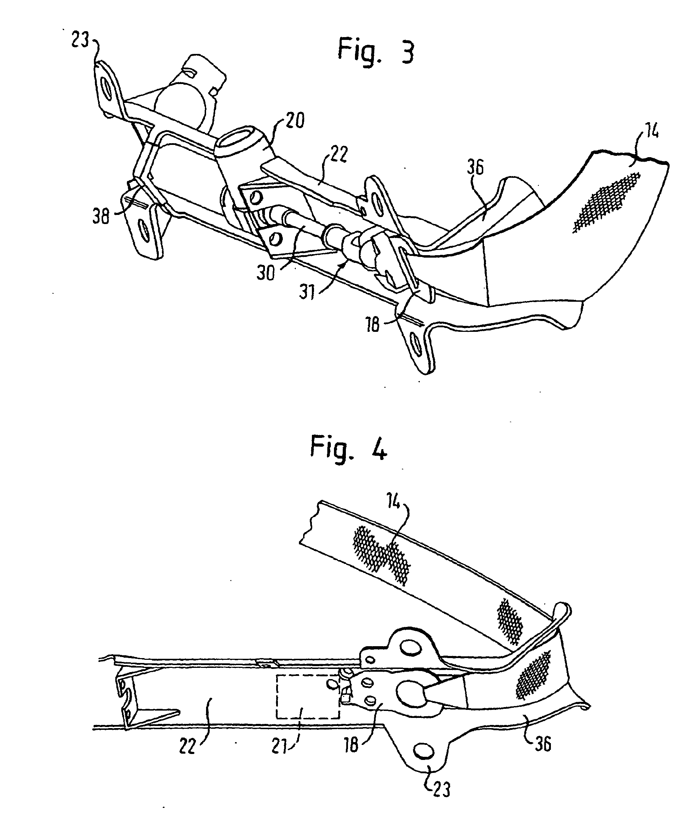

Das in Figur 1 gezeigte Fahrzeuginsassen-Rückhaltesystem 10 umfaßt eine Sicherheitsgurtanordnung 12, mit einem Gurtband 14, einem Gurtschloß 16 und einem mit dem Gurtband 14 verbundenen Beschlag 18 (siehe Figur 3). Es ist mindestens ein Gurtstraffer 20 vorgesehen. Im in Figur 1 gezeigten Beispiel sind ein Schloßstraffer ( linker Straffer 20 in Figur 1) und ein End- oder Umlenkbeschlagstraffer (rechter Straffer 20 in Figur 1) vorgesehen, die vorzugsweise beide bekannte pyrotechnisch betriebene Linearstraffer sind. Genauso kann jedoch nur ein Gurtstraffer zur Ausführung beider Straffbewegungen vorgesehen sein.

Außerdem ist ein langgestrecktes, starres Befestigungselement 22 vorgesehen, das in diesem Beispiel als U-förmig gebogene Metallschiene ausgebildet ist. Das Befestigungselement 22 ist unterhalb eines Fahrzeugsitzes 24 angeordnet (in Figur 1 durch gestrichelte Linien angedeutet) und bevorzugt über am Befestigungselement 22 ausgebildete abstehende Laschen 23 am Fahrzeugsitz 24 befestigt. Das Befestigungselement 22 ist an zwei Schienen 26, die mit dem Fahrzeugsitz 24 verbunden sind, befestigt. Die Schienen 26 sind so ausgebildet, daß sie zur Fahrzeugsitzverschiebung zum Eingriff in fahrzeugbodenfeste Gegenschienen 28 eingreifen können. Die Anordnung des Fahrzeugsitzes 24 auf den Schienen 26 und 28 entspricht dem bekannten Stand der Technik und wird hier nicht weiter beschrieben.

Das Fahrzeuginsassen-Rückhaltesystem gemäß der Erfindung beruht auf einem Baukastenprinzip. Das am Fahrzeugsitz befestigte Befestigungselement 22 weist eine Vielzahl von Befestigungsmöglichkeiten für die Komponenten des Rückhaltesystems auf, so daß sich das Fahrzeuginsassen-Rückhaltesystem flexibel und einfach für die für das jeweilige Fahrzeug gewünschte Ausführung des Rückhaltesystems konfigurieren läßt. Der oder die Gurtstraffer 20 sind auf jeden Fall am Befestigungselement 22 befestigt. Das Gurtschloß 16 und/oder der Beschlag 18 können jeweils entweder mit dem oder den Gurtstraffer(n) 20 oder, wenn eine Verwendung eines Gurtstraffers für dieses Element nicht gewünscht ist, über ein am Befestigungselement ausgebildetes oder mit diesem verbundenes Haltemittel 21 direkt an dem Befestigungselement 22 montiert sein (siehe z.B. Figur 4). Zur Erhöhung der Stabilität des Befestigungselements 22 ist eine Verstrebung 38 im Bereich eines Gurtstraffers 20 vorgesehen.

Bevorzugt ist am Befestigungselement 22 eine Führung 31 für den Beschlag 18 ausgebildet, in der sich der Beschlag während der Straffung bewegt.

Am Befestigungselement 22 ist gemäß Figur 2 zusätzlich eine Umlenkung 34, z.B. eine Rolle, angebracht, über die das Angriffsmittel 30 vom in etwa senkrecht ausgerichteten Gurtschloß 16 zum waagrecht am Befestigungselement 22 angeordneten Gurtstraffer 20 umgelenkt wird. Für den Schloßstraffer 16, 20 ist zusätzlich eine halbringförmige Führung 32 vorgesehen, die gleichzeitig dazu dient, während des Normalbetriebs das Gurtschloß 16 in seiner Position zu fixieren. Die Führung 32 und die Umlenkung 34 sind bevorzugt an einem Ende des Befestigungselements 22 ausgebildet.

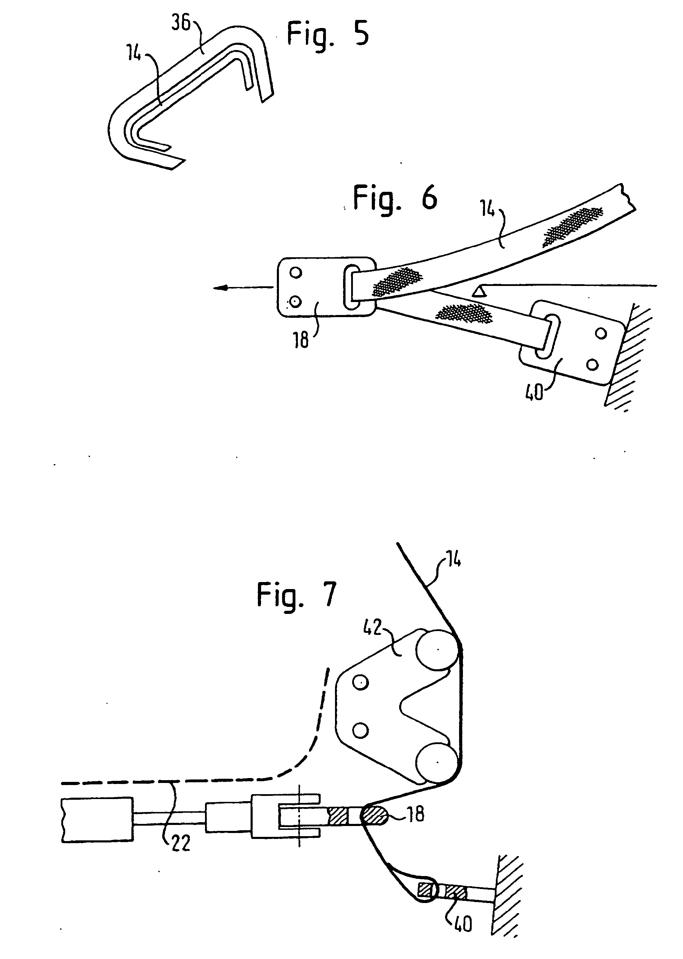

Alternativ hierzu kann die Umlenkung für das Gurtband 14 oder für ein das Gurtschloß 16 bzw. den Beschlag 18 und den Straffer 20 verbindendes Angriffsmittel 30 dadurch erreicht werden, daß die Enden des U-förmigen Befestigungselements 22 seitlich am Fahrzeugsitz 24 entlang ein Stück nach oben gebogen werden. Die Umlenkung wird mit dem Bezugszeichen 36 versehen und ist quasi einstückig am Befestigungselement 22 ausgebildet. Der Querschnitt der Umlenkung 36 verengt sich in Richtung zum Gurtstraffer 20 so weit, daß er kleiner als die Breite des Gurtbands14 wird, wodurch das Gurtband 14 während des Einzugs quer zu seiner Längsrichtung gefaltet wird (siehe Figur 5).

Alternativ kann das Gurtband 14 über die Einzugslänge auch entlang dessen Längsrichtung zusammengenäht sein, so daß seine Breite reduziert ist.

Um die Flexibilität des Baukastensystems möglichst gut ausnützen zu können, ist am zum Befestigungselement 22 geführten Ende des Gurtbands 14 stets ein Beschlag 18 vorgesehen. Dieser Beschlag 18 kann, wie in dem in den Figuren 3 und 4 dargestellten Beispiel, als Endbeschlag ausgebildet sein oder auch, wie im weiteren beschrieben, als Umlenkbeschlag. Der Beschlag 18 ist entweder über das Angriffsmittel 30 mit einem der Gurtstraffer 20 (Figuren 1, 3) oder, wie in Figur 4 angedeutet, direkt mit dem Befestigungselement 22 verbunden, abhängig von der gewünschten Konfiguration des Rückhaltesystems.

In einer anderen Alternative, die in den Figuren 6 und 7 gezeigt ist, ist der Beschlag 18 als Umlenkbeschlag ausgebildet. In diesem Fall ist ein weiterer Beschlag 40 mit dem Gurtband 14 verbunden, der fest am Fahrzeug fixiert ist. Der Beschlag 18 ist entweder über das Angriffsmittel 30 mit einem Gurtstraffer 20 oder direkt mit dem Befestigungselement 22 verbunden.

Die Verwendung eines Umlenkbeschlages an dieser Stelle bietet zwei Vorteile. Zum einen verdoppelt sich die Länge des Straffwegs, zum anderen ist es so möglich, den Sicherheitsgurt bereits vollständig im Fahrzeug zu montieren, bevor der Fahrzeugsitz mit der Fahrzeuginsassen-Rückhaltevorrichtung montiert wird. In diesem Fall muß der Beschlag 18 so ausgebildet sein, daß er nachträglich in den Gurtbandverlauf eingebracht werden kann.

In der in Figur 7 gezeigten Ausführungsform ist zusätzlich eine mit zwei Umlenkrollen bestückte Umlenkung 42 für das Gurtband vorgesehen, die vorzugsweise ebenfalls mit dem Befestigungselement 22 verbunden ist. Diese Umlenkung 42 dient dazu, den Verlauf des Gurtbands 14 vor dem Umlenkbeschlag 18 zu optimieren.

Der Beschlag 18 kann über ein Verbindungselement, das im folgenden näher beschrieben wird, mit dem Angriffsmittel 30 verbunden sein.

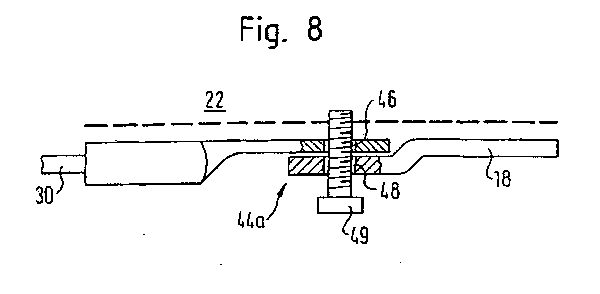

Die in Figur 8 dargestellte Lösung für das Verbindungselement 44a ist vor allem in solchen Fällen günstig, in denen der Beschlag 18 auch ohne Verbindung mit einem Straffer 20 am Befestigungselement 22 fixiert werden soll. In diesem Fall besteht das Verbindungselement 44a aus einer am Beschlag 18 sowie einer am Angriffsmittel 30 ausgebildeten Öse 46, 48, die durch eine Schraube 49 oder einen Befestigungsbolzen miteinander verbunden werden können.

Das Verbindungselement 44a ist vorzugsweise so ausgebildet, z.B. flächig, daß eine Verdrehsicherung für das Gurtband 14 erreicht wird.

Die Schraube 49 kann gleichzeitig dazu eingesetzt werden, das Verbindungselement 44a am Befestigungselement 22 zu fixieren. In diesem Fall ist vorzugsweise an der Schraube 49, am Befestigungselement 22 oder am Verbindungselement 44a eine Sollbruchstelle vorgesehen, damit sich das Verbindungselement 44a bei der Straffung vom Befestigungselement 22 lösen kann.

Das baukastenförmig aufgebaute flexible Fahrzeuginsassen-Rückhaltesystem hat auch den Vorteil, daß die gewünschten Bauteile bereits am Befestigungselement 22 vormontiert werden können. So können z.B. das Gurtschloß, der oder die Gurtstraffer und eventuelle Umlenkungen bereits am Befestigungselement 22 fixiert werden, bevor dieses mit dem Fahrzeugsitz 24 verbunden wird. Der Fahrzeugsitz 24 kann, wie in der Fahrzeugfertigung üblich, als eines der letzten Bauteile ins Fahrzeug eingesetzt werden. Bevorzugt ist eines der Teile eines Verbindungselements bereits entweder mit dem Angriffsmittel 30 oder direkt mit dem Befestigungselement 22 verbunden. In diesem Fall kann, nach dem Einsetzen des Fahrzeugsitzes ins Fahrzeug, entweder ein Umlenkbeschlag in das Gurtband 14 eingefädelt werden, der das zweite Teil des Verbindungselements aufweist, wobei die beiden Teile, wie oben beschrieben, leicht miteinander in Verbindung gebracht werden können, um den Beschlag 18 mit dem Befestigungselement 22 zu verbinden. Alternativ kann auch der ansonsten am Fahrzeug befestigte Endbeschlag mit dem zweiten Teil des Verbindungselements und dann entsprechend mit dem ersten Teil des Verbindungselements schnell und einfach verbunden werden.

## Patentansprüche

1. Fahrzeuginsassen-Rückhaltesystem mit
einer Sicherheitsgurtanordnung (12), die ein Gurtband (14), ein Gurtschloß (16) und einen Gurtend- oder Gurtumienkbeschlag (18) aufweist,
zwei Schienen (26), mit denen ein Fahrzeugsitz (24) verbunden ist und die zur Fahrzeugsitzverschiebung zum Eingriff in fahrzeugbodenfeste Gegenschienen (28) ausgebildet sind,
einem langgestreckten, starren Befestigungselement (22), das sich unterhalb des Sitzes (24) zwischen den Schienen (26) erstreckt und das mit beiden Schienen (26) verbunden ist, und
wenigstens einem am Befestigungselement (22) montierten Gurtstraffer (20),
den **dadurch gekennzeichnet, daß** das Befestigungselement (22) eine Führung (31) für den Gurtend- oder Gurtumienkbeschlag (18) aufweist, in der sich der Gurtend- oder Gurtumienkbeschlag (18) während einer Straffung des Sicherheitsgurts bewegt.

2. Fahrzeuginsassen-Rückhaltesystem nach Anspruch 1, **dadurch gekennzeichnet, daß** zwei Gurtstraffer (20) vorgesehen sind, die beide am Befestigungselement (22) befestigt sind.

3. Fahrzeuginsassen-Rückhaltesystem nach Anspruch 2, **dadurch gekennzeichnet, daß** einer der Gurtstraffer (20) ein Schloßstraffer und einer der Gurtstraffer (20) ein End- oder Umlenkbeschlagstraffer ist.

4. Fahrzeuginsassen-Rückhaltesystem nach einem der vorhergehenden Ansprüche, **dadurch gekennzeichnet, daß** einer der Gurtstraffer mit einem Angriffsmittel (30) in Verbindung steht, das mit dem Gurtschloß (16) oder mit einem End- oder Umlenkbeschlag (18) verbunden ist, und daß das Befestigungselement (22) eine Umlenkung für das Angriffsmittel (30) aufweist.

5. Fahrzeuginsassen-Rückhaltesystem nach einem der vorhergehenden Ansprüche, **dadurch gekennzeichnet, daß** das Befestigungselement (22) und der oder die Gurtstraffer (20) eine vormontierte Einheit bilden.

6. Fahrzeuginsassen-Rückhaltesystem nach einem der vorhergehenden Ansprüche, **dadurch gekennzeichnet, daß** das Befestigungselement (22) eine Umlenkung (36) für das Gurtband (14) des Sicherheitsgurts aufweist.

7. Fahrzeuginsassen-Rückhaltesystem nach einem der vorhergehenden Ansprüche, **dadurch gekennzeichnet, daß** der Gurtstraffer (20) ein End- oder Umlenkbeschlagstraffer ist und daß das Befestigungselement (22) eine im Querschnitt U-förmige Strebe ist, die sich auf der Seite des End- oder Umlenkbeschlagstraffers am Sitz (24) entlang nach oben erstreckt und in diesem Bereich eine U-förmige Führung und Umlenkung (36) für das Gurtband (14) bildet.

8. Fahrzeuginsassen-Rückhaltesystem nach einem der vorhergehenden Ansprüche, **dadurch gekennzeichnet, daß** im Auslösefall des wenigstens einen Gurtstraffers ein Einziehen des Gurtbandes in Längsrichtung des Befestigungselements (22) erfolgt, wobei ein Gurtbandabschnitt im Bereich des Befestigungselements eine verringerte Breite aufweist oder durch das Befestigungselement beim Einziehen eine verringerte Breite erhält.

9. Fahrzeuginsassen-Rückhaltesystem nach einem der vorhergehenden Ansprüche, **dadurch gekennzeichnet, daß** der Gurtstraffer (20) ein End- oder Umlenkbeschlagstraffer ist und daß das Gurtband (14) während der Straffung quer zur Längsrichtung des Gurtbandes (14) gefaltet wird.

10. Fahrzeuginsassen-Rückhaltesystem nach einem der vorhergehenden Ansprüche, **dadurch gekennzeichnet, daß** sich die Breite des U-förmig ausgeführten Befestigungselements (22) seitlich des Sitzes (24) nach unten verringert, um schmäler als das Gurtband (14) zu werden und dieses bei seinem Entlanggleiten während der Straffung zu falten.

11. Fahrzeuginsassen-Rückhaltesystem nach einem der Ansprüche 1 bis 9, **dadurch gekennzeichnet, daß** der Gurtstraffer (20) ein End- oder Umlenkbeschlagsstraffer ist und daß das einzuziehende Stück des Gurtbands (14) entlang dessen Längsrichtung so zusammengenäht ist, daß seine Breite reduziert ist.

12. Fahrzeuginsassen-Rückhaltesystem nach einem der vorhergehenden Ansprüche, **dadurch gekennzeichnet, daß** der Gurtstraffer (20) ein End- oder Umlenkbeschlagstraffer ist, der mit einem Angriffsmittel (30) verbunden ist, und daß die Verbindung zwischen dem Angriffsmittel (30) und dem End- oder Umlenkbeschlag (18) durch eine Verschraubung (44a) realisiert ist.

13. Fahrzeuginsassen-Rückhaltesystem nach einem der vorhergehenden Ansprüche, **dadurch gekennzeichnet, daß** eine Verbindungsstelle zwischen Angriffsmittel (30) und End- oder Umlenkbeschlag (18) über ein lösbares Bauteil (64; 80; 92;112) am Befestigungselement (22) montiert ist.

14. Fahrzeuginsassen-Rückhaltesystem nach einem der Ansprüche 12 und 13, **dadurch gekennzeichnet, daß** am Befestigungselement (22) ein auf die Geometrie des End- oder Umlenkbeschlags (18) abgestimmtes Haltemittel (21) vorgesehen ist, das bei nicht vorgesehenem End- oder Umlenkbeschlagstraffer (20) eine unmittelbare Befestigung des End- oder Umlenkbeschlags (18) am Befestigungselement (22) erlaubt.

15. Fahrzeuginsassen-Rückhaltesystem nach Anspruch 12, **dadurch gekennzeichnet, daß** der End- oder Umlenkbeschlag (18) wenigstens eine Öse (48) und das Befestigungselement (22) eine Gegenbohrung (21) hat und daß eine sich durch Öse (48) und Gegenbohrung (21) erstreckende Schraube (49) den End- oder Umlenkbeschlag (18) an dem Befestigungselement (22) fixiert.

16. Fahrzeuginsassen-Rückhaltesystem nach einem der vorhergehenden Ansprüche, **dadurch gekennzeichnet, daß** die Schienen (26) und das Befestigungselement (22) einen vormontierten Schlitten bilden, an dem der Fahrzeugsitz (24) befestigt werden kann, und daß der Schlitten, das Gurtschloß (16) und der wenigstens eine Gurtstraffer (20) eine vormontierte Einheit bilden.

17. Fahrzeuginsassen-Rückhaltesystem nach einem der vorhergehenden Ansprüche, **gekennzeichnet durch** einen mit den Schienen (26) verbundenen Fahrzeugsitz (24).

## Claims

1. Vehicle passenger restraining system with
a safety belt arrangement (12) comprising a belt strap (14), a belt lock (16) and a belt end- or belt deflecting-plate (18),
two tracks (26) to which a vehicle seat (24) is connected and which are designed for sliding the vehicle seat in order to engage in counter-tracks (28) secured to the vehicle floor,
a longitudinally extending, rigid fixing element (22) which extends underneath the seat (24) between the tracks (26) and which is connected to both tracks (26), and
at least one belt tightener (20) mounted on the fixing element (22),
**characterised in that** the fixing element (22) has a guide (31) for the belt end- or belt deflecting-plate (18) in which the belt end- or belt deflecting-plate (18) moves whilst the safety belt is being tightened.

2. Vehicle passenger restraining system as claimed in claim 1, **characterised in that** two belt tighteners (20) are provided, both of which are attached to the fixing element (22).

3. Vehicle passenger restraining system as claimed in claim 2, **characterised in that** one of the belt tighteners (20) is a lock tightener and one of the belt tighteners (20) is an end- or deflecting plate-tightener.

4. Vehicle passenger restraining system as claimed in one of the preceding claims, **characterised in that** one of the belt tighteners is connected to a contact means (30) which is connected to the belt lock (16) or to an end- or deflecting-plate (18) and the fixing element (22) has a deflector for the contact means (30).

5. Vehicle passenger restraining system as claimed in one of the preceding claims, **characterised in that** the fixing element (22) and the belt tightener or tighteners (20) constitute a pre-assembled unit.

6. Vehicle passenger restraining system as claimed in one of the preceding claims, **characterised in that** the fixing element (22) has a deflector (36) for the belt strap (14) of the safety belt.

7. Vehicle passenger restraining system as claimed in one of the preceding claims, **characterised in that** the belt tightener (20) is an end- or deflecting-plate tightener and the fixing means (22) is a strut with a U-shaped cross-section which extends upwards on the side of the end- or deflecting plate-tightener along the seat (24) and forms a U-shaped guide and deflector (36) for the belt strap (14) in this region.

8. Vehicle passenger restraining system as claimed in one of the preceding claims, **characterised in that** if the at least one belt tightener is triggered, the belt strap is retracted in the longitudinal direction of the fixing element (22) and a belt strap portion in the region of the fixing element has a reduced width or a reduced width is imparted to it by the fixing element during retraction.

9. Vehicle passenger restraining system as claimed in one of the preceding claims, **characterised in that** the belt tightener (20) is an end- or deflection plate-tightener and the belt strap (14) is folded transversely to the longitudinal direction of the belt strap (14) during tightening.

10. Vehicle passenger restraining system as claimed in one of the preceding claims, **characterised in that** the width of the U-shaped fixing element (22) becomes narrower towards the bottom at the side of the seat (24) so that it becomes narrower than the belt strap (14) and folds the latter as it slides during tightening.

11. Vehicle passenger restraining system as claimed in one of claims 1 to 9, **characterised in that** the belt tightener (20) is an end- or deflecting plate tightener and the piece of the belt strap (14) to be retracted along its longitudinal direction is stitched together so that its width is reduced.

12. Vehicle passenger retraining system as claimed in one of the preceding claims, **characterised in that** the belt tightener (20) is an end- or deflecting plate-tightener which is connected to a contact means (30) and the connection between the contact means (30) and the end- or deflecting-plate (18) is provided in the form of a screw connection (44a) .

13. Vehicle passenger restraining system as claimed in one of the preceding claims, **characterised in that** a connecting point between the contact means (30) and end- or deflecting-plate (18) is mounted on the fixing element (22) by means of a releasable component (64; 80; 92; 112).

14. Vehicle passenger restraining system as claimed in one of claims 12 and 13, **characterised in that** a retaining means (21) designed to co-operate with the geometry of the end- or deflecting-plate (18) is provided on the fixing element (22), which, if it is not provided with an end- or deflecting plate-tightener (20), allows the end- or deflecting plate (18) to be attached directly to the fixing element (22).

15. Vehicle passenger restraining system as claimed in claim 12, **characterised in that** the end- or deflecting-plate (18) has at least one eye (48) and the fixing element (22) has a complementary bore (21) and a screw (49) extending through the eye (48) and complementary bore (21) secures the end- or deflecting-plate (18) on the fixing element (22).

16. Vehicle passenger restraining system as claimed in one of the preceding claims, **characterised in that** the tracks (26) and the fixing element (22) form a pre-assembled carriage to which the vehicle seat (24) can be affixed and the carriage, the belt lock (16) and the at least one belt tightener (20) constitute a pre-assembled unit.

17. Vehicle passenger restraining system as claimed in one of the preceding claims, **characterised by** a vehicle seat (24) connected to the tracks (26).

## Revendications

1. Système de retenue pour les occupants d'un véhicule comportant
un dispositif de ceinture de sécurité (12) comprenant une courroie de ceinture (14), un dispositif de fermeture de ceinture (16) et un accessoire d'extrémité ou de déviation de ceinture (18),
deux rails (26) auxquels est connecté un siège de véhicule (24) et constitués de manière à s'adapter à des contre-rails (28) fixés au plancher du véhicule et permettant le déplacement du siège de véhicule,
un élément de fixation (22) allongé et rigide s'étendant sous le siège (24) entre les rails (26) et connecté aux deux rails (26) et
au moins un tendeur de ceinture (20) monté à l'élément de fixation (22),
**caractérisé en ce que** l'élément de fixation (22) présente un guide (31) pour l'accessoire d'extrémité ou de déviation de ceinture (18), moyennant quoi l'accessoire d'extrémité ou de déviation de ceinture (18) se déplace lors d'une mise sous tension de la ceinture de sécurité.

2. Système de retenue pour les occupants d'un véhicule selon la revendication 1, **caractérisé en ce que** deux tendeurs de ceinture (20) sont pourvus, qui sont tous deux fixés à l'élément de fixation (22).

3. Système de retenue pour les occupants d'un véhicule selon la revendication 2, **caractérisé en ce que** l'un des tendeurs de ceinture (20) est un tendeur de verrouillage et l'un des tendeurs de ceinture (20) est un tendeur d'accessoire d'extrémité ou de déviation.

4. Système de retenue pour les occupants d'un véhicule selon l'une des revendications précédentes, **caractérisé en ce que** l'un des tendeurs de ceinture est connecté à un moyen de saisie (30) relié au dispositif de fermeture de ceinture (16) ou à un accessoire d'extrémité ou de déviation (18) et **en ce que** l'élément de fixation (22) présente une déviation pour le moyen de saisie (30).

5. Système de retenue pour les occupants d'un véhicule selon l'une des revendications précédentes, **caractérisé en ce que** l'élément de fixation (22) et le ou les tendeurs de ceinture (20) constituent une unité prémontée.

6. Système de retenue pour les occupants d'un véhicule selon l'une des revendications précédentes, **caractérisé en ce que** l'élément de fixation (22) présente une déviation (36) pour la courroie de ceinture (14) de la ceinture de sécurité.

7. Système de retenue pour les occupants d'un véhicule selon l'une des revendications précédentes, **caractérisé en ce que** le tendeur de ceinture (20) est un tendeur d'accessoire d'extrémité ou de déviation et **en ce que** l'élément de fixation (22) est un support à section transversale en forme de U qui s'étend sur le côté du tendeur d'accessoire d'extrémité ou de déviation vers le haut le long du siège (24) et constitue dans cette région un guide et une déviation (36) en forme de U pour la courroie de ceinture (14).

8. Système de retenue pour les occupants d'un véhicule selon l'une des revendications précédentes, **caractérisé en ce qu'**en cas d'activation d'au moins un des tendeurs de ceinture, une rétraction de la courroie de ceinture se produit en direction longitudinale de l'élément de fixation (22), moyennant quoi une section de la courroie de ceinture dans la région de l'élément de fixation présente une largeur restreinte ou procure une largeur restreinte du fait de l'élément de fixation lors de la rétraction.

9. Système de retenue pour les occupants d'un véhicule selon l'une des revendications précédentes, **caractérisé en ce que** le tendeur de ceinture (20) est un tendeur d'accessoire d'extrémité ou de déviation et **en ce que** la courroie de ceinture (14) est pliée perpendiculairement à la direction longitudinale de la courroie de ceinture (14) lors de la mise sous tension.

10. Système de retenue pour les occupants d'un véhicule selon l'une des revendications précédentes, **caractérisé en ce que** la largeur de l'élément de fixation (22) réalisé en forme de U se rétrécit vers le bas sur le côté du siège (24), de façon à devenir plus étroit que la courroie de ceinture (14) et à plier celle-ci lors de son glissement lors de la mise sous tension.

11. Système de retenue pour les occupants d'un véhicule selon l'une des revendications 1 à 9, **caractérisé en ce que** le tendeur de ceinture (20) est un tendeur d'accessoire d'extrémité ou de déviation et **en ce que** la partie de la courroie de ceinture (14) à rétracter est cousue selon sa direction longitudinale de telle manière que sa largeur se réduit.

12. Système de retenue pour les occupants d'un véhicule selon l'une des revendications précédentes, **caractérisé en ce que** le tendeur de ceinture (20) est un tendeur d'accessoire d'extrémité ou de déviation connecté à un moyen de saisie (30) et **en ce que** la connexion entre le moyen de saisie (30) et l'accessoire d'extrémité ou de déviation (18) est effectuée au moyen d'un raccord fileté (44a).

13. Système de retenue pour les occupants d'un véhicule selon l'une des revendications précédentes, **caractérisé en ce qu'**une connexion entre le moyen de saisie (30) et l'accessoire d'extrémité ou de déviation (18) est montée au moyen d'un composant détachable (64 ; 80 ; 92 ; 112) à l'élément de fixation (22).

14. Système de retenue pour les occupants d'un véhicule selon l'une des revendications 12 ou 13, **caractérisé en ce qu'**un moyen d'arrêt (21) adapté à la géométrie de l'accessoire d'extrémité ou de déviation (18) est pourvu sur l'élément de fixation (22), permettant une fixation immédiate de l'accessoire d'extrémité ou de déviation (18) à l'élément de fixation (22) dans le cas où un tendeur d'accessoire d'extrémité ou de déviation (20) n'est pas pourvu.

15. Système de retenue pour les occupants d'un véhicule selon la revendication 12, **caractérisé en ce que** l'accessoire d'extrémité ou de déviation (18) comporte au moins un oeillet (48) et l'élément de fixation (22) un contre-perçage (21) et **en ce qu'**une vis (49) disposée à travers l'oeillet (48) et le contre-perçage (21) fixe l'accessoire d'extrémité ou de déviation (18) à l'élément de fixation (22).

16. Système de retenue pour les occupants d'un véhicule selon l'une des revendications précédentes, **caractérisé en ce que** les rails (26) et l'élément de fixation (22) constituent une glissière prémontée, à laquelle le siège de véhicule (24) peut être monté, et **en ce que** la glissière, le dispositif de fermeture de ceinture (16) et au moins un tendeur de ceinture (20) constituent une unité prémontée.

17. Système de retenue pour les occupants d'un véhicule selon l'une des revendications précédentes, **caractérisé par** un siège de véhicule (24) connecté aux rails (26).
